(19) Europäisches Patentamt
European Patent Office
Office européen des brevets

(11) EP 0 712 001 B1

## (12) EUROPEAN PATENT SPECIFICATION

(45) Date of publication and mention
of the grant of the patent:
**16.06.1999 Bulletin 1999/24**

(51) Int Cl.$^6$: **G01P 3/46**, H02P 5/178

(21) Application number: **95202959.3**

(22) Date of filing: **02.11.1995**

(54) **A method and a circuit system for detecting the speed of rotation of a DC motor**

Verfahren und Schaltkreis zur Ermittlung der Drehzahl eines Gleichstrommotors

Méthode et circuit pour détecter la vitesse de rotation d'un moteur à courant continu

(84) Designated Contracting States:
**BE DE ES FR GB SE**

(30) Priority: **09.11.1994 IT MI942265**

(43) Date of publication of application:
**15.05.1996 Bulletin 1996/20**

(73) Proprietor: **FINMECCANICA S.p.A. AZIENDA ANSALDO**
**16128 Genova (IT)**

(72) Inventor: **Bobbio, Attilio**
**I-16157 Genova (IT)**

(74) Representative: **Maggioni, Claudio et al**
**c/o JACOBACCI & PERANI S.p.A.**
**Via Visconti di Modrone, 7**
**20122 Milano (IT)**

(56) References cited:
**WO-A-88/00771**          **US-A- 3 519 906**

- **CONTROL OF ELECTRICAL DRIVES, 1990 pages 41-45, W. LEONARD 'separately excited dc machine'**
- **PATENT ABSTRACTS OF JAPAN vol. 009, no. 265 (P-399) 23 October 1985 & JP-A-60 113 155 (TOSHIBA KK) 19 June 1985**
- **IEEE TRANSACTIONS ON INSTRUMENTATION AND MEASUREMENT, vol. im-27, no. 1, March 1978 NEW YORK US, pages 99-102, S.RAJARAM ET AL. 'A new method for speed measurement/control of dc motors'**

## Description

The present invention relates to DC motor drives and more particularly to a method, and to a circuit system, for detecting the speed of rotation of a separately exited DC motor.

In many applications of DC motors it is necessary to know the instantaneous speed of rotation of the motor for the purpose of regulation and control. For example, in the case of electric traction vehicles for urban transport the measurement of the speed of rotation is necessary for two main purposes: to limit the speed of the motor to a maximum admissible value, and to effect a velocity feedback by comparison of the instantaneous speed of the motor with the position of the accelerator pedal for the purpose of obtaining a response to the accelerator similar to that which is obtained in vehicles driven by an internal combustion engine. In this application the measurement of the speed must be precise when close to the maximum speed, but need not be so precise in other situations: in particular, for the said feedback it is sufficient that the measurement be a continuous and monotonic function of the effective speed and that, with the vehicle stationary and the accelerator raised, the measurement should be nil.

A known technique for measuring the speed of rotation of a motor makes use of an electromechanical transducer such as a tachometric dynamo or an "encoder" associated with the motor. A device of this type requires relatively delicate and, therefore, expensive operations for mechanical adjustment between the transducer and the motor, is relatively bulky because it is necessarily positioned on the axis of the motor, and in applications such as that of an electric traction vehicle in which the ambient conditions are particularly hostile due to dust, moisture, heat and vibrations, is of poor reliability or, in any event, requires frequent maintenance operations.

Another known technique, utilised in drives having small motors with brushes and fixed exitation uses an indirect measurement of the speed of rotation: the back-electromotive force which develops in the armature winding due to the effect of the rotation is detected with a suitable sensor; since the back-electromotive force is proportional to the speed of rotation and to the exitation flux, and since this latter is constant, the measured quantity gives a good indication of the speed of the motor. The main disadvantage of this technique lies in the fact that the armature winding supply must be set to zero for the whole of the time the measurement of the back-electromotive force is taking place. It can be used therefore only in cases in which the inertia of the rotor is sufficiently large to make interruptions in the supply negligible.

Another method of measuring motor speed is known from WO88/00771.

An object of the present invention is to propose a method for detecting the speed of rotation of a DC motor having separate exitation which does not require the use of electromechanical transducers and does not require interruptions in the electrical supply to the motor. This object is achieved, according to the invention, by the fact that the method provides the following operations:

- detecting the armature voltage,
- detecting the armature current,
- detecting the exitation flux,
- forming the product between the detected armature current and a predetermined quantity corresponding to the armature circuit resistance to obtain, as a result, the value of the ohmic voltage drop across the armature circuit,
- taking the difference between the detected armature voltage and the value obtained for the voltage drop across the armature circuit and
- forming the ratio between the said difference and the detected exitation flux to obtain, as a result of this ratio, a quantity proportional to the speed of rotation.

Another object of the invention is to provide a circuit arrangement for putting the above briefly-defined method into practice, which will be simple, reliable and of low cost.

This other object is achieved according to the invention with a circuit system generally as described and charaterised in the fourth of the claims which follow the present description.

The invention and the advantages which derive from it will become evident from the following detailed description of an exemplary and therefore in no way limitative embodiment with reference to the attached drawings, in which:

> Figure 1 shows in schematic form a DC motor having separate exitation and the principal functional blocks for control of its supply; and
> Figure 2 is a diagram showing a basic circuit system according to the invention.

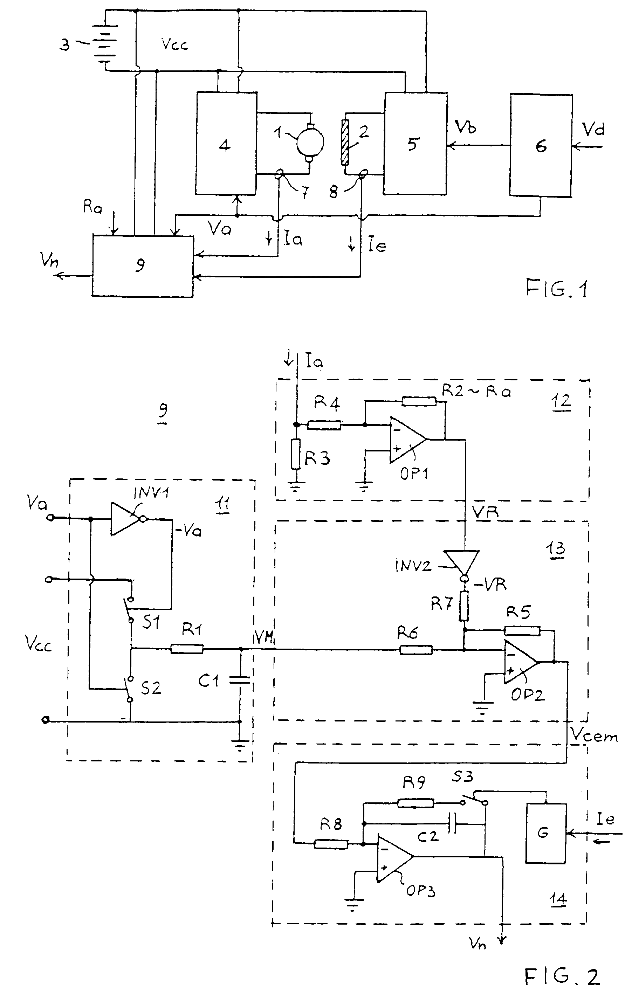

In Figure 1 is shown a DC motor, generally indicated M, which has an armature winding 1 and an exitation winding 2 supplied by a DC voltage source Vcc shown as a battery 3, via respective switching converters (choppers) 4 and 5. These latter are controlled in a known way by sequences of pulse signals respectively indicated Va and Vb, produced by a control unit in dependence on one or more control quantities, generally indicated Vd. Two current sensors indicated 7 and 8 are associated with the armature and exitation circuits respectively, to detect the currents Ia and Ie respectively which flow through them. A circuit arrangement 9 receives at its input various electrical quantities which characterise the operation of the motor, that is the supply voltage Vcc, the armature current Ia, the exitation current Ie and the resistance Ra of the armature circuit, and provides at its output an electrical quantity Vn which is a measure of the speed of rotation of the motor M.

Before examining in detail the structure of the circuit assembly 9 it is useful to remember that the speed of rotation n of a DC motor is directly proportional to the back-electromotive force (Vcem) developed in the armature circuit and inversely proportional to the exitation flux $\phi$:

$$n \sim \frac{Vcem}{\phi} \qquad (1)$$

and that the back-electromotive force Vcem is substantially equal to the difference between the armature voltage VM and the ohmic voltage drop VR across the armature circuit:

$$Vcem = VM - VR \qquad (2)$$

Since the voltage drop VR is given by the product of the resistance Ra of the armature circuit and the armature current Ia:

$$VR = Ra\ Ia \qquad (3),$$

by substituting equation (3) into equation (2) and then equation (2) into equation (1) one has:

$$n \sim \frac{VM - Ra\ Ia}{\phi} \qquad (4)$$

In the example shown in Figure 1 the armature voltage is an average voltage VM which is obtained by the product of the supply voltage Vcc and the duty cycle d.c. (the ratio between the duration of the pulse and the period) of the control signal Va of the armature chopper 4:

$$VM = d.c.\ Vcc \qquad (5)$$

In the preferred embodiment of the invention, moreover, it is assumed that the exitation flux $\phi$ is directly proportional to the exitation current:

$$\phi \sim Ie \qquad (6)$$

By substituting equation (5) and equation (6) into equation (4) one obtains:

$$n \sim \frac{d.c.\ Vcc - Ra\ Ia}{Ie} \qquad (7)$$

According to the method of the invention, the speed of rotation is obtained in an indirect manner from several electrical quantities of the motor and the associated control circuitry, namely: the supply voltage Vcc, the duty cycle d.c. of the control signal Va for the armature chopper, the armature current Ia, the exitation current Ie and the resistance Ra of the armature circuit.

The accuracy of detection of the speed of rotation according to relation (7) is strongly conditioned by the assumption made above about the exitation flux. As is known, in fact, the relation between flux and exitation current in a DC motor having variable exitation is not linear because of the magnetic saturation. However, in many applications, and in particular in that of vehicles mentioned at the beginning of the present description, the accuracy is sufficient because the maximum speed is obtained at an exitation which is greatly reduced with respect to the saturation value and because, in relation to the situation with the vehicle stationary and the accelerator raised, the back-electromotive force is nil so that the measurement of the speed of rotation according to the expression (7) is zero.

The circuit arrangement 9 of the system for detecting the speed of rotation in a preferred embodiment of the invention is represented in Figure 2. This comprises a first circuit, enclosed in a broken line rectangle indicated 11, which produces at its output a voltage VM proportional to the average value of the armature voltage, a second circuit, enclosed in a rectangle indicated 12, which provides at its output a voltage VR which represents the ohmic voltage drop across the armature circuit, a third circuit, enclosed in a rectangle indicated 13, which provides at its output a voltage Vcem proportional to the back-electromotive force by taking the difference between the output voltages of the first (11) and the second (12) circuit, and a fourth circuit, enclosed in a rectangle indicated (14) which forms the ratio between the voltage Vcem provided by the circuit 13 and the exitation current Ie detected by the sensor 8. The output of this fourth circuit is a voltage Vn which represents the speed of rotation n of the motor.

The first circuit 11 comprises two controlled electronic switches S1 and S2, for example two transistors, connected in series between the two terminals of the supply voltage source Vcc and controlled by the control voltage Va of the armature chopper 4. More particularly, one switch is controlled directly by the voltage Va and the other is controlled by the voltage Va inverted by an invertor INV1. The junction point between the two switches is connected to an integrator constituted by a resistor R1 and a capacitor C1. It can easily be demonstrated that the voltage VM which forms across the terminals of the capacitor C1 has a value substantially equal to the product of the supply voltage Vcc and the duty cycle of the control voltage Va.

The second circuit 12 is a multiplier comprising an operational amplifier OP1 with a feedback resistor R2 of value proportional to the resistance Ra of the armature circuit, which receives at its input a voltage proportional to the armature current Ia. This input voltage can be obtained, as is shown, by applying a current of value Ia to a resistor R3 connected to the input of the operational amplifier OP1 via a resistor R4. The output voltage of the operational amplifier will be

$$VR = (R2/R4) \, R3 \, Ia = kRaIa$$

where k is a constant of proportionality determined by the values of the resistors R2, R3 and R4.

The third circuit 13 is a subtracter comprising an operational amplifier OP2 with a feedback resistor R5 which receives at its input, via a resistor R6 and a resistor R7 respectively, the voltage VM at the output of the first circuit 11 and the voltage -VR obtained by inverting, with an invertor INV2, the voltage VR at the output from the second circuit 12. The output voltage Vcem, therefore, because it is proportional to the difference between the voltage VM and the voltage VR, represents the back-electromotive force which develops across the terminals of the armature winding by the effect of the rotation.

The fourth circuit 14 is a divider constituted by a variable gain amplifier which receives at its input, via a resistor R8, the voltage Vcem at the output from the third circuit 13. The variable gain amplifier is constituted by an operation amplifier OP3 with a feedback network equivalent to a variable resistance. More particularly, the feedback network is constituted by a circuit comprising a capacitor C2 in parallel with the series connection of a resistor R9 and an electronic switch S3, for example a transistor, controlled by a generator G. This latter produces a continuous sequence of pulses the duty cycle of which is proportional to the exitation current Ie. The capacity of the capacitor C2 is chosen in such a way as to eliminate oscillations due to the sequence of control pulses from the electronic switch S3. This latter is controlled in such a way as to be closed during the pulses and open between one pulse and the next in the sequence. In this way the resistance Rf of the circuit with respect to DC voltage is inversely proportional to the exitation current: Rf ∼ 1/Ie. The gain of the amplifier, g = Rf/R8, , therefore, is also inversely proportional to the exitation current so that the output voltage Vn of the amplifier will be proportional to the ratio between the input voltage Vcem and the exitation current:

$$Vn = g \, Vcem \sim Vcem/Ie$$

By assuming the exitation flux to be proportional to the exitation current and bearing in mind the above-mentioned relation (1) the voltage Vn is a quantity which represents the speed of rotation n of the motor.

As can be established, the objects of the invention are achieved by the above-described circuit system. This system, in fact, makes it possible to reconstruct the speed of rotation of the motor by utilising only electrical quantities of the motor itself and its control circuit, and can be achieved using low cost circuit components such as operational amplifiers, electronic switches and a few other components of ordinary type.

Naturally many variants are possible within the ambit of the same inventive concept. For example, the various circuits which constitute the system can be achieved in a substantially different manner from that represented as long as they perform the indicated functions. Moreover, the method of the invention can be put into practice by utilising digital techniques rather than analogue techniques as described.

## Claims

1. A method for detecting the speed of rotation of a DC motor having separate excitation, characterised in that it comprises the following operations:

   detecting the armature voltage (VM),
   detecting the armature current (Ia),
   detecting the excitation flux ($\phi$),
   forming the product between the detected armature current (Ia) and a predetermined quantity corresponding to the armature circuit resistance (Ra) to obtain, as a result, the value of the ohmic voltage drop (VR) across the armature circuit,
   taking the difference between the detected armature voltage (VM) and the value obtained for the voltage drop (VR) across the armature circuit and
   forming the ratio between the said difference and the detected excitation flux to obtain, as a result of this ratio, a quantity proportional to the speed of rotation (n).

2. A method according to Claim 1, in which the detection of the excitation flux ($\phi$) substantially comprises detecting the excitation current, assuming that the excitation flux is proportional to the excitation current.

3. A method according to Claim 1 or Claim 2 applied to a motor the armature voltage of which is controlled by a chopper converter functioning with a predetermined supply voltage (Vcc) and with a predetermined duty cycle, in which the detection of the armature voltage (VM) substantially comprises forming the product between the supply voltage and the duty cycle (d.c.) to obtain an average quantity (VM) which represents the armature voltage.

4. A circuit system for detecting the speed of rotation of a DC motor with separate excitation controlled by at least one chopper converter, characterised by the fact that it comprises

first circuit means (11) having the supply voltage (Vcc) of the armature chopper converter applied across two input terminals, and a control signal (VA) of the armature chopper applied to another input, the first circuit means being operable to produce at its output a first voltage value proportional to the average value (VM) of the armature voltage,
a first current sensor (7) for detecting the armature current (Ia),
a second current sensor (8) for detecting the excitation current (Ie),
second circuit means (12) having one input connected to a first current sensor (7) and being operable to produce at its output a second voltage value (VR) indicative of the product of the armature current (Ia) and a quantity which represents the armature resistance (Ra),
third circuit means (13) having at its input the first voltage value (VM) and the second voltage value (VR) and being operable to provide at its output a difference voltage (Vcem) between these two values and
fourth circuit means (14) having a first input connected to the second current sensor (8) and a second input connected to the output of the third circuit means (13) and being operable to produce at an output terminal an electrical quantity (Vn) proportional to the ratio between the difference voltage (Vcem) and the excitation current (Ie), this electrical quantity (Vn) representing the speed of rotation (n) of the motor.

5. A system according to Claim 4, in which the said fourth circuit means (14) comprise a pulse generator (G) having a control terminal connected to the said first input and being operable to produce at its output a sequence of pulses the duty cycle of which is proportional to the excitation current (Ie), a variable gain amplifier (OP3, S3) having a gain control terminal connected to the output of the pulse generator (G), and input and output terminals connected respectively to the said second input and to the output terminal of the fourth circuit means (14).

6. A system according to Claim 5, in which the variable gain amplifier comprises an operational amplifier (OP3) and a feedback network for the operational amplifier comprising a controlled switch (S3) the control terminal of which is connected to the control terminal of the amplifier.

7. A system according to Claim 6, in which the resistive network includes a resistor (R9) in series with the controlled switch (S1) and a capacitor (C2) in parallel with the series connection of the resistor and the switch.

**Patentansprüche**

1. Verfahren zur Ermittlung der Drehzahl eines Gleichstrommotors mit Fremderregung,
   **dadurch gekennzeichnet, daß**
   es aus den folgenden Verfahrensschritten besteht:

   Ermittlung der Ankerspannung (VM),

   Ermittlung des Ankerstroms (Ia),

   Ermittlung des Erregungsflusses (Φ),

   Bilden des Produkts aus dem ermittelten Ankerstrom (Ia) und einer vorbestimmten Größe entsprechend dem Ankerkreiswiderstand (Ra), um als Ergebnis die Größe des Ohmschen Spannungsabfalls (VR) über dem Ankerkreis zu erhalten,

   Bilden der Differenz zwischen der ermittelten Ankerspannung (VM) und dem für den Spannungsabfall (VR) über dem Ankerkreis erhaltenen Wert, und

   Bilden des Verhältnisses dieser Differenz und des ermittelten Erregungsflusses, um als Ergebnis dieses Verhältnisses eine der Drehzahl (n) proportionale Größe zu erhalten.

2. Verfahren nach Anspruch 1, bei dem die Ermittlung des Erregungsflusses (Φ) im wesentlichen die Ermittlung des Erregungsstroms unter der Annahme umfaßt, daß der Erregungsfluß dem Erregungsstrom proportional ist.

3. Verfahren nach Anspruch 1 oder 2 in Anwendung auf einen Motor, dessen Ankerspannung von einem Unterbrecher-Wandler gesteuert wird, der mit einer vorbestimmten Versorgungsspannung (Vcc) und einem vorbestimmten Tastverhältnis arbeitet, bei dem die Ermittlung der Ankerspannung (VM) im wesentlichen die Bildung des Produkts zwischen der Versorgungsspannung und dem Tastverhältnis (d. c.) umfaßt, um eine mittlere Größe (VM) zu erhalten, die die Ankerspannung darstellt.

4. Schaltungsanordung zur Ermittlung der Drehzahl eines Gleichstrommotors mit Fremderregung, gesteuert von wenigstens einem Unterbrecher-Wandler,
   **gekennzeichnet durch**
   einen ersten Schaltkreis (11) an zwei Eingänge von dem die Versorgungsspannung (Vcc) des Ankerunterbrecher-Wandlers angelegt ist, und an einem weiteren Eingang von dem ein Steuersignal (VA) des Ankerunterbrechers angelegt ist, wobei der erste Schaltkreis so betreibbar ist, daß er an seinem Ausgang eine erste Spannungsgröße proportional der mittleren Größe (VM) der Ankerspannung erzeugt,

einen ersten Stromsensor (7) zur Ermittlung des Ankerstromes (la),

einen zweiten Stromsensor (8) zur Ermittlung des Erregungsstromes (le),

einen zweiten Schaltkreis (12), dessen einer Eingang mit dem ersten Stromsensor (7) verbunden ist und der so betreibbar ist, daß er an seinem Ausgang eine zweite Spannungsgröße (VR) erzeugt, die das Produkt des Ankerstromse (la) und einer Größe angibt, die den Ankerwiderstand (Ra) darstellt,

einen dritten Schaltkreis (13), an dessen Eingang die erste Spannungsgröße (Vm) und die zweite Spannungsgröße (VR) anliegen, und der so betreibbar ist, daß er an seinem Ausgang eine Differenzspannung (Vcem) zwischen diesen beiden Größen erzeugt, und

einen vierten Schaltkreis (14), dessen erster Eingang mit dem zweiten Stromsensor (8) und dessen zweiter Eingang mit dem Ausgang des dritten Schaltkreises (13) verbunden und der so betreibbar ist, daß er an seinem Ausgangsanschluß eine elektrische Größe (Vn) proportional dem Verhältnis zwischen der Differenzspannung (Vcem) und dem Erregungsstrom (le) erzeugt, wobei diese elektrische Größe (Vn) die Drehzahl (n) des Motors darstellt.

5. Anordnung nach Anspruch 4, bei der der vierte Schaltkreis (14) einen Impulsgenerator (G) aufweist, der einen Steueranschluß hat, der mit dem ersten Eingang verbunden und derart betreibbar ist, daß er an seinem Ausgang eine Folge von Impulsen erzeugt, deren Tastverhältnis proportional dem Erregungsstrom (le) ist, sowie einen Verstärker (OP3, S3) mit veränderbarer Verstärkung, der einen Verstärkungssteueranschluß hat, der mit dem Ausgang des Impulsgenerators (G) verbunden ist, und Ein- bzw. Ausgangsanschlüsse, die mit dem zweiten Eingangs- und dem Ausgangsanschluß des vierten Schaltkreises (14) verbunden sind.

6. Anordnung nach Anspruch 5, bei der der Verstärker mit veränderbarer Verstärkung einen Funktionsverstärker (OP3) und ein Rückkopplungsnetzwerk für den Funktionsverstärker aufweist, das einen gesteuerten Schalter (S3) hat, dessen Steueranschluß mit dem Steueranschluß des Verstärkers verbunden ist.

7. Anordnung nach Anspruch 6, bei der das Widerstandsnetzwerk einen Widerstand (R9) in Reihe mit dem gesteuerten Schalter (S1) und einen Kondensator (C2) parallel mit der Reihenschaltung des Widerstands und des Schalters hat.

**Revendications**

1. Procédé de détection de la vitesse de rotation d'un moteur CC ayant une excitation séparée, caractérisé en ce qu'il comprend les opérations suivantes :

la détection de la tension d'armature (VM),
la détection du courant d'armature (la),
la détection du flux d'excitation (F),
la formation du produit du courant d'armature détecté (la) et d'une quantité prédéterminée correspondant à la résistance du circuit d'armature (Ra) de façon à obtenir, pour résultat, la valeur de la chute de tension ohmique (VR) aux bornes du circuit d'armature,
la prise de la différence entre la tension d'armature détectée (VM) et la valeur obtenue pour la chute de tension (VR) aux bornes du circuit d'armature, et
la formation du rapport entre la dite différence et le flux d'excitation détecté de façon à obtenir, pour résultat de ce rapport, une quantité proportionnelle à la vitesse de rotation (n).

2. Procédé selon la revendication 1, dans lequel la détection du flux d'excitation (F) comprend sensiblement la détection du courant d'excitation, en supposant que le flux d'excitation est proportionnel au courant d'excitation.

3. Procédé selon la revendication 1 ou 2 appliqué à un moteur dont la tension d'armature est commandée par un convertisseur à découpage fonctionnant avec une tension d'alimentation prédéterminée (Vcc) et avec un taux d'utilisation prédéterminé, dans lequel la détection de la tension d'armature (VM) comprend sensiblement la formation du produit de la tension d'alimentation et du taux d'utilisation (c.c.) de façon à obtenir une quantité moyenne (VM) qui représente la tension d'armature.

4. Système à circuits pour détecter la vitesse de rotation d'un moteur CC ayant une excitation séparée commandée par au moins un convertisseur à découpage, caractérisé par le fait qu'il comprend

des premiers moyens à circuits (11) ayant la tension d'alimentation (Vcc) du convertisseur à découpage d'armature appliquée à deux bornes d'entrée, et un signal de commande (VA) du convertisseur à découpage d'armature appliqué à une autre entrée, les premiers moyens à circuits pouvant être activés pour produire à leur sortie une première valeur de tension proportionnelle à la valeur moyenne (VM) de la tension d'armature,

un premier capteur de courant (7) pour détecter le courant d'armature (Ia),

un second capteur de courant (8) pour détecter le courant d'excitation (Ie),

des seconds moyens à circuits (12) ayant une entrée connectée à un premier capteur de courant (7) et pouvant être actionnés pour produire à leur sortie une seconde valeur de tension (VR) indicative du produit du courant d'armature (Ia) et d'une quantité qui représente la résistance d'armature (Ra),

des troisièmes moyens à circuits (13) ayant à leur entrée la première valeur de tension (VM) et la seconde valeur de tension (VR), et pouvant être activés pour délivrer à leur sortie une tension de différence (Vcem) entre ces deux valeurs, et

des quatrièmes moyens à circuits (14) ayant une première entrée connectée au second capteur de courant (8) et une seconde entrée connectée à la sortie des troisièmes moyens à circuits (13), et pouvant être activés pour délivrer à une borne de sortie une quantité électrique (Vn) qui est proportionnelle au rapport entre la tension de différence (Vcem) et le courant d'excitation (Ie), cette quantité électrique (Vn) représentant la vitesse de rotation (n) du moteur.

5. Système selon la revendication 4, dans lequel les dits quatrièmes moyens à circuits (14) comprennent un générateur d'impulsions (G) ayant une borne de commande connectée à la dite première entrée et pouvant activé pour délivrer à sa sortie une séquence d'impulsions dont le taux d'utilisation est proportionnel au courant d'excitation (Ie), un amplificateur de gain variable (OP3, S3) ayant une borne de commande de gain connectée à la sortie du générateur d'impulsions (G), et des bornes d'entrée et de sortie connectées respectivement à la dite seconde entrée et à la borne de sortie des quatrièmes moyens à circuits (14).

6. Système selon la revendication 5, dans lequel l'amplificateur de gain variable comprend un amplificateur opérationnel (OP3) et un réseau de rétroaction pour l'amplificateur opérationnel comprenant un commutateur commandé (S3) dont la borne de commande est connectée à la borne de commande de l'amplificateur.

7. Système selon la revendication 6, dans lequel le réseau résistif inclut une résistance (R9) en série avec le commutateur commandé (S1) et un condensateur (C2) en parallèle avec la connexion en série de la résistance et du commutateur.

FIG. 1

FIG. 2